# EUROPÄISCHE PATENTSCHRIFT

(11) **EP 1 064 636 B1**
(45) Veröffentlichungstag und Bekanntmachung des Hinweises auf die Patenterteilung: **07.05.2003**
(21) Anmeldenummer: 99919050.7
(22) Anmeldetag: 02.03.1999
(51) Int. Cl.: G08G 1/09

(54) **VERFAHREN ZUM UBERTRAGEN EINER EINE ANFRAGE EINES ENDGERATES BEI EINER ZENTRALE BEANTWORTENDEN ANTWORT VON DER ZENTRALE**
METHOD FOR TRANSMITTING A RESPONSE TO AN INQUIRY BY A TERMINAL TO A CONTROL CENTRE FROM SAID CONTROL CENTRE
PROCEDE POUR TRANSMETTRE UNE REPONSE D'UNE UNITE CENTRALE A LA DEMANDE D'UN TERMINAL FAITE A LADITE UNE UNITE CENTRALE

(30) Priorität: 23.03.1998 DE 19813814
(43) Veröffentlichungstag der Anmeldung: 03.01.2001
(73) Patentinhaber: Vodafone Holding GmbH, 40213 Düsseldorf (DE)
(72) Erfinder: LARIMA, Pirjo, D-47055 Duisburg (DE); GILL, Thorsten, D-40223 Düsseldorf (DE); MÜLLER, Thomas, D-40474 Düsseldorf (DE)
(74) Vertreter: Meissner, Peter E., Dipl.-Ing.
(86) Internationale Anmeldenummer: DE9900629
(87) Internationale Veröffentlichungsnummer: WO99049438

(56) Entgegenhaltungen:
- WO-A-97/34431
- WO-A-98/03952
- WO-A-98/09222
- DE-A- 19 644 703

## Beschreibung

Die Erfindung betrifft ein Verfahren zum Übertragen einer eine Anfrage eines Endgerätes bei einer Zentrale beantwortenden Antwort von der Zentrale an das Endgerät über einen Kommunikationskanal.

In der DE-Patentanmeldung 196 447 03 derselben Anmelderin ist ein Verfahren zum Übertragen einer eine Anfrage eines Endgerätes bei einer Zentrale beantwortenden Antwort von der Zentrale an das Endgerät über einen Kommunikationskanal offenbart. Die Übermittlung der Antworten von einer Zentrale bzw. zentralen Einheit an ein Endgerät erfolgt hier mit einigen wenigen anwendungsunabhängigen Antwortformaten, welche identisch in einer Datenendeinrichtung (Endgerät) und in der Zentrale gespeichert sind, wobei einer Antwort der Zentrale an das Endgerät jeweils eines dieser Formate zugeordnet ist und die Antwortformate langfristig unveränderlich und anwendungsunabhängig eingespeichert sind. (DE-Patentanmeldung 196 447 03, Seite 4, Absatz 2 und 3). Dieses Verfahren hat den Vorteil, daß wegen der festgelegten Antwortformate keine Definition des Formates einer Anwort über den Kommunikationskanal erforderlich ist und daß damit eine effiziente und somit kostengünstige Ausnutzung des Kommunikationskanals erfolgt. Nachteil dieses Verfahrens ist eine Einschränkung auf die vorgegebenen Formate. Die Anzahl vorgegebbarer Formate ist durch den Speicherbereich insbesondere des Endgerätes beschränkt. Spätere Aktualisierungen für neue Antwortformate für Antworten in neu eingeführten Diensten sind nicht möglich. Auch eine dynamische Anpassung des Antwortsformats an die in der Zentrale erstellte Antwort ist nicht möglich: wenn beispielsweise ein Endgerät bei der Zentrale nach dem nähst gelegenen freien Parkhaus in der Stadt anfragt, jedoch die Zentrale nach einer Recherche dem Endgerät zu antworten hat, daß in der Stadt keine freien Parkhäuser mehr zur Verfügung stehen jedoch in einem Vorort P&R-Parkplätze frei sind, ist ein vorgegebenes Antwortformat, welches zum nächsten Parkhaus in der Stadt den Ort und die Reisezeit angibt, ungeeignet. Eine Definition aller möglichen Antwortformate zu einer Frage wäre zu aufwendig. Nachteilig bei diesem Verfahren ist ferner der hohe Kommunikationsaufwand im Falle von Versionsänderungen für die der Kommunikation zu Grunde liegende Software.

Aus dem Internet ist hingegen eine darstellungsorientierte Metasprache (Markup Language) bekannt, die zentralseitig die Definition der im Endgerät zu erfolgenden Darstellung der von der Zentrale an das Endgerät übertragenen Informationen erlaubt. Damit ist für die Zentrale eine sehr universelle, individuelle Gestaltung der Inhalte von zu übertragenden Antworten möglich, da lediglich deren im Endgerät zu erfolgende Darstellung übermittelt wird. Im Internet gebräuchlich ist die Gestaltung von ganzen Bildschirmseiten, die neben Text auch Grafiken enthalten können. Dabei wird neben zu übertragenden Inhalten auch deren Darstellung im Endgerät, also das Layout vorgegeben und mit übermittelt. Grundsätzlich ist derart auch die Übertragung von Klang- Sequenzen repräsentierenden Daten an die Endeinrichtung möglich. Nachteilig an diese Verfahrensweise ist, daß die mit dem sachlichen Inhalt einer Antwort übertragene vorgegebene Darstellung des Inhalts im Endgerät bestimmte Eigenschaften und Fähigkeiten des Endgerätes insbesondere hinsichtlich der Darstellung voraussetzt. Wenn aktuell oder künftig unterschiedliche Endgeräte verwendbar sein sollen, wäre eine zentralseitige Anpassung an alle speziellen Endgeräte sehr aufwendig und bei neuen Endgeräten nur mit Aufwand aktualisierbar. Die Übermittlung von Antworten an unterschiedliche Endgeräte in mehreren aufeinanderfolgenden unterschiedlichen Antwortformaten, welche jeweils an ein Endgerät angepaßt sind, würde eine sehr ineffiziente Nutzung des Kommunikationskanals darstellen.

Aus der Schrift WO98/03952 ist ein Verfahren zum Übertragen einer eine Anfrage eines Endgerätes bei einer Zentrale beantwortenden Antwort von der Zentrale an das Endgerät über einen Kommunikationskanal bekannt, bei dem die von der Zentrale übertragenen Antworten einen Antwortelement-Kopfteil und einen frei formatierbaren Antwortelement-Datensatz besitzen. Der Kopf enthält hinweise auf Modellnummern, Seriennummern und Softwareversionsnummern eines Endgerätes. Beim Empfang durch das Endgerät wird eine Kompatibilitätsprüfung durchgeführt und dadurch über die Weiterverarbeitung des Antwortelement-Datensatzes entschieden.

Hiervon ausgehend ist die Aufgabe der Erfindung, für unterschiedliche Endgeräte, insbesondere Endgeräte mit unterschiedlichen Darstellungsmöglichkeiten, eine Übermittlung einer Vielzahl unterschiedlich aufgebauter Anworten zu Endgeräts-Anfragen bei einer Zentrale möglichst effizient über einen Kommunikationskanal, insbesondere Funkkanal, zu ermöglichen. Die Aufgabe wird durch den Gegenstand des unabhängigen Anspruchs gelöst. Die Erfindung erlaubt für eine Vielzahl sehr unterschiedlich aufgebauter Antworten eine kompakte und damit kostengünstige Übermittlung über einen Kommunikationskanal. Der Aufbau einer Antwort aus Antwortelement-Datentypen-Codes, welche jeweils Aufbau und Bedeutung eines ebenfalls in der Antwort enthaltenden Antwortelement-Datensatzes repräsentieren, ist effizient und eindeutig, wobei Aufbau und Bedeutung des Antwortelementdatensatzes in der Antwort aufgrund der mit der Antwort übermittelten Antwortelement-Datentypen-Codes im Endgerät wegen der endgerätsseitig und zentralenseitig übereinstimmenden Tabelle von Antwortelement-Datentypen-Codes und jeweils zugeordnetem Datentyp ersichtlich sind. Das Verfahren ist deshalb sehr universell; insbesondere erlaubt es auch zu einer bestimmten Anfrage eines Endgerätes bei der Zentrale abhängig von der in der Zentrale ermittelten Antwort den jeweils optimalen Aufbau der Antwort und damit eine effiziente Nutzung des Kommunikationskanales sowie eine gute Information des Endgeräts. Dabei kann der Aufbau einer Antwort auf eine bestimmte Frage in der Zentrale in Abhängigkeit von der in der Zentrale berechneten, recherchierten oder sonstwie ermittelten, zu übertragenden Antwort in Abhängigkeit von den als Antwort zu übertragenden Inhalten gewählt werden, weil das Antwortformat der Antwort durch die mitübertragenden Antwortelement-Datentypen-Codes dem Endgerät eindeutig und effizient mitgeteilt wird.

Ein derartiges Verfahren zum Übertragen einer Antwort einer Zentrale an ein Endgerät ist für unterschiedlichste Gebiet geeignet. Insbesondere ist es im Verkehrstelematikbereich geeignet zur Übermittlung von Verkehrsinformationen, Verkehrsprognosen, Fahrtroutenempfehlungen oder dergleichen auf eine Anfrage eines Endgerätes bei der Zentrale hin. Femer ist das Verfahren geeignet zur Beantwortung von Anfragen hinsichtlich Reservierungsmöglichkeiten für Veranstaltungen, Sehenswürdigkeiten, Museen, Restaurants, hinsichtlich verfügbarer Parkplätze in einem bestimmten Bereich hinsichtlich der Buchung von Hotels etc..

Besonders vorteilhafte Ausgestaltungen der Erfindung ergeben sich aus den Unteransprüchen.

So kann die Antwort der Zentrale an ein Endgerät auf eine Anfrage hin in einen Antwortformat-Teil und einen Antwort-Datensatz-Teil aufgegliedert sein. Die Aufgliederung kann beispielsweise derart sein, daß die Antwort mit einem Antwortformat-Teil beginnt und der Antwort-Datensatzteil folgt, so daß die Antwort übersichtlich aufgebaut ist. Auch in der Anfrage eines Endgerätes bei der Zentrale, auf welche hin die zentralseitge Antwort erstellt und übermittelt wird, kann ein Aufbau mit Anfrageelement-Datentypen-Codes und Antwortelement-Datensätzen vorgesehen sein. So kann beispielsweise bei einer Anfrage zum nächst-gelegenen Parkplatz in der Anfrage ein Anfrageelement-Datentyp-Code enthalten sein, der angibt, daß der nächste Parkplatz angefordert wird, sowie ein Anfrageelement-Datentyp-Code der angibt, daß die aktuelle Position des anfragenden Fahrzeuges enthalten ist; darauf kann beispielsweise in einer durch den (sich auf die Parkplatzsuche beziehenden) Anfrageelement-Datentypcode repräsentierte Anfrageelement-Datensatz angegeben sein, wie weit der Parkplatz vom aktuellen Fahrzeug entfernt sein darf, wobei in einem nachfolgenden Anfrageelement-Datensatz (zum Anfrageelement-Datentyp-Code zur Fahrzeugposition) in vorgegebener Weise die Fahrzeugposition angegeben sein kann. Dies ermöglicht auch eine sehr effiziente, insbesondere auch auf das Antwortverfahren abgestimmte Ausbildung der Anfrage. Für die Anfrage und die Antwort können übereinstimmende Datentypen verwendet werden, welche in der Anfrage als Anfrageelement-Datentyp-Code und in der Antwort als Antwortelement- Datentyp-Code durch eine gleiche Codesequenz referenziert werden können. Wenn zu einer Anfrage mit bestimmten Anfrageelement-Datentypen-Codes eine Antwort mit mit dem Anfrageelement-Datentypen-Code und/oder mit in der Anfrage als Vorgabe übermittelten Antwortelementen-Datentypen-Codes übereinstimmende Antwortelement-Datentypen-Codes verwendet werden, ist zuverlässig sichergestellt, daß das Endgerät letzere kennt und interpretieren kann.

Wenn die Zentrale für eine Antwort die Antwortelement-Datentypen-Codes erst nach Ermittlung der in der Antwort mit mindestens einem Antwortelementdatensatz zu übertragenden Informationen auswählt ist eine hinsichtlich der ermittelten Daten optimal aufgebaute Antwort und damit eine gute Ausnutzung des Kommunikationskanals möglich.

Die Antwortelement-Datentypen sind zweckmäßig zumindest teilweise identisch zu Anfrageelement-Datentypen. Ebenso sind zweckmäßig Antwortelement-Datentypen zugeordnete Antwortelement-Datentypen-Codes und Anfrageelement-Datentypen zugeordnete Anfrageelement-Datentypen-Codes zumindest teilweise identisch. Zweckmäßig sind sie auch zumindest teilweise identisch im Endgerät und in der Zentrale abgespeichert.

Für mindestens eine bestimmte Antwort und/oder für mindestens eine bestimmte Anfrage kann im Endgerät der mindestens eine erforderliche Datentypcode abgespeichert sein. Dieser kann im Endgerät bei der Herstellung abgespeichert sein. Auch ist eine Abspeicherung nach einer Antwort einer Zentrale beim Endgerät möglich. Ferner ist es möglich, daß das Endgerät Anfrageformat-Teile oder Antwortformat-Teile für Anfragen bzw. Antworten vom Endgerät auf eine spezielle Anfrage hin einzeln oder als Auswahl-Liste erhält.

Ein Antwortelement-Datentyp-Code ist in der Regel genau einem Datentyp zugeordnet, was das Verfahren sehr universell macht. Jedoch ist es möglich, daß einige Antwortelement-Datentyp-Codes jeweils einer Sequenz von mehreren Datensätzen zugeordnet sind, um auch bestimmte komplexe Antworten zusätzlich zu den sehr universellen kurzen Antwortelement-Datensätzen vorgebbar definieren zu können und das Verfahren noch universeller zu machen.

Das Endgerät ist vorzugsweise ein mobiles Endgerät und die Zentrale eine ortsfeste Zentrale. Der Kommunikationskanal ist zweckmäßig ein Funkkanal, insbesondere Mobilfunk-Kanal. Die Übertragung über einen Mobilfunkkanal erfolgt z. B. als Kurznachricht, in Europa insbesondere als GSM-SMS, in anderen Gebieten unter den dort definierten Kurznachrichtenformaten.

Durch den Datentyp wird in der im Endgerät und in der Zentrale identischen Liste (von Datentypen-Codes und ihren zugeordneten Datentypen) jeweils insbesondere die Länge eines Datensatzes und eventuell weitere Formatangaben (Anzahl der Bit-Oktets etc.) enthält. Ferner kann der in der Liste im Endgerät bzw. der Zentrale gespeicherte Datentyp auch die Definition des Inhalts eines Datensatzes (zu einem bestimmten Antwortelement-Datentyp-Code) repräsentieren, was die Interpretation einer Antwort im Endgerät optimiert.

Zu einer Antwort kann insbesondere eine Text-Sequenz übertragen werden, wobei eine Textsequenz in einer geeigneten Tabelle in der Zentrale gespeichert sein und jeweils zusammen mit einem bestimmten Antwortelement-Datentyp-Code übermittelt werden kann. Ein derartiger Text kann beispielsweise auf einem Display des Endgerätes alleine oder im Zusammenhang mit weiteren in der Antwort übertragenden Daten optisch oder akustisch ausgegeben werden.

Das erfindungsgemäße Verfahren kann in einer Zentrale und im Endgerät realisiert werden. Weitere Merkmale und Vorteile ergeben sich aus den weiteren Unteransprüchen und der nachfolgenden Beschreibung eines Ausführungsbeispiels anhand der Zeichnung. Dabei zeigt:
- Figur 1: grob abstrahiert den zeitlichen Ablauf bei einer Antwort einer Zentrale eines Endgerätes auf einer Anfrage hin und
- Figur 2: schematisch den erfindungsgemäßen Aufbau einer gemäß Figur 2 übertragenden Antwort.

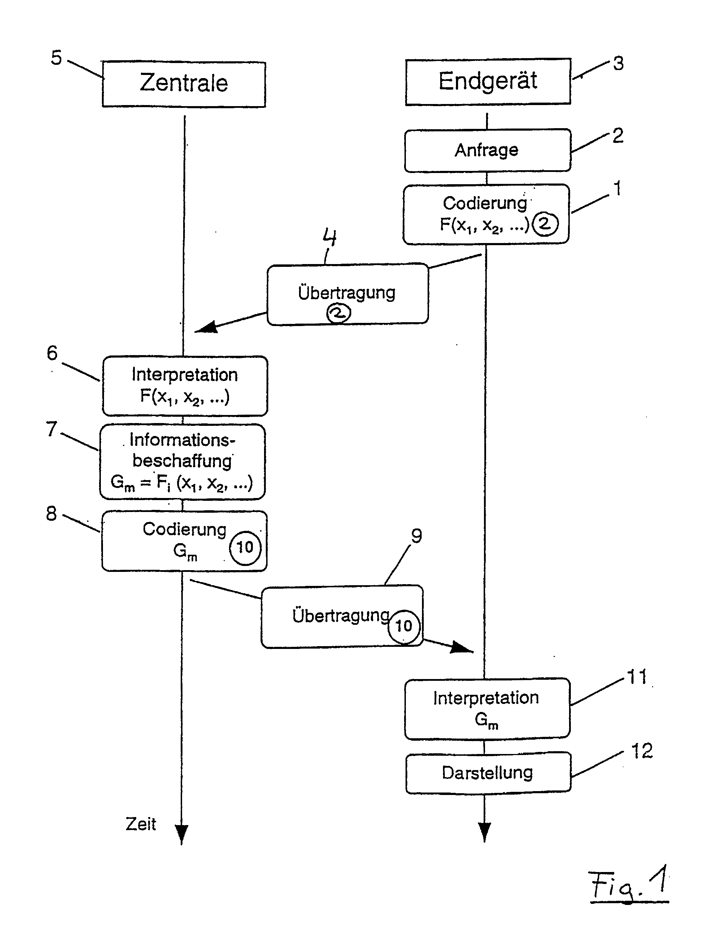

Figur 1 zeigt schematisch grob den zeitlichen Ablauf der internen Codierung 1 einer vom Benutzer in das Endgerät eingegebenen Anfrage 2 in einem Endgerät 3, die Übertragung 4 vom Endgerät an die Zentrale 5, die Interpretation 6 der Anfrage 2 in der Zentrale 5, die zentralseitige Informationsbeschaffung 7 von zur Erstellung einer Antwort erforderlichen Informationen, die Erstellung (="Codierung GM") 8 einer Antwort aufgrund der beschafften (7) Informationen, die Übertragung 9 der codierten Antwort 10 von der Zentrale 5 an das Endgerät 3, die Interpretation (im Endgerät) der übertragenen Antwort 10 und die Darstellung 12 von in der Antwort enthaltenden oder durch sie repräsentierten Informationen im Endgerät.

Die Anfrage 2 kann beispielsweise eine Anfrage sein, welche Parkhäuser in der Stadt aktuell freie Parkplätze aufweisen. Wenn ein Endgerätbenutzer in das Endgerät eine derartige Anfrage 2 eingibt, wird die an die Zentrale zu übermittelnde Anfrage 2 codiert (1). Dabei kann die Anfrage zweiteilig strukturiert mit einem Anfrageformat-Teil und einen Anfrage-Datensatzteil aufgebaut sein, wobei im Anfrageformat-Teil enthaltene Anfrageelement-Datentypen-Code angeben, welche Datentypen die im Anfrage-Datensatz-Teil enthaltenen Anfrageelement-Datensätze besitzen, wobei im Endgerät ebenso wie in der Zentrale eine Tabelle von Datentypen-Codes (Anfrageelement-Datentypen-Codes und Antwortelement-Datentypen-Codes) und zugeordneten Datentypen (für Anfrage und Antwort) vorhanden ist. Beispielsweise kann im Anfrageformat-Teil eine Sequenz enthalten sein, aufgrund der das Endgerät und die Zentrale wissen, daß im Anfrage-Datensatzteil ein Anfrageelement-Datensatz mit der aktuellen Position des Endgerätes enthalten ist, welche letzere beispielsweise für eine Parkhausinformation über Parkhäuser in der Nähe des Endgerätes zweckmäßig ist. Bei diesem Beispiel kann im Anfrageformat-Teil ein weiterer Anfrageeelement-Datentyp-Code enthalten sein, welcher angibt, daß ein Parkhaus gesucht wird und daß zum Beispiel im Anfrage-Datensazteil ein in einer bestimmtem Weise aufgebauter Anfrageelement-Datensatz mit der Information wie weit das Parkhaus entfernt sein darf, enthalten ist.

Die Anfrage kann (ebenso wie die spätere Antwort) weiter hier nicht ausgeführte Elemente wie Header enthalten. Im Header kann beispielsweise angegeben sein, ob das Endgerät zur Anfrage berechtigt ist, wieviele Datentypencodes enthalten sind etc.

Ein Datensatz in einer Anfrage oder Antwort kann einen oder mehrere Parameter enthalten. Mehrere Parameter in einem Datensatz können den gleichen oder einen unterschiedlichen Datentyp aufweisen, der in einem Datentyp-Code repräsentiert übertragen wird.

Die Anfrage wird vom Endgerät an die Zentrale 5 über einen Kommunikationskanal übertragen (4). Der Kommunikationskanal kann insbesondere ein Funkkanal sein, wenn das Endgerät mobil und die Zentrale ortsfest ist. Insbesondere ist ein Mobilfunkkanal geeignet, bei welchem zweckmäßig eine Übertragung über einen Kurznachrichtenkanal wie zum Beispiel GSM-SMS erfolgt. In der Zentrale erfolgt eine Interpretation 6 der Anfrage. Hierzu kann die Zentrale 5 insbesondere in einer Tabelle nachprüfen, welchen Datentyp (insbesondere mit welcher Datenlänge und welche Bedeutung) in der Anfrage enthaltene Antwortelemente-Datentypen-Codes haben. Nach der Interpretation der Anfrage kann in der Zentrale eine Informationsbeschaffung 7 erfolgen. Die Informationsbeschaffung 7 kann die Erstellung einer Verkehrsinformation, Verkehrsprognose, Navigationshilfe, die Abfrage freier Hotels, freier Parkplätze etc. umfassen.

Aufgrund der beschafften (7) Informationen erfolgt in der Zentrale eine Codierung 8 einer Antwort 10. Die Codierung der Antwort erfolgt erfindungsgemäß derart, daß für zu übertragende Daten der jeweils geeignete Datentyp gewählt wird, aus einer Tabelle der dem Datentyp zugehörige Antwortelement-Datentypen-Code ausgewählt wird und in der Antwort zu jedem zu übertragende Antwortelement-Datensatz mit einem bestimmten Datentyp der diesen Datentyp repräsentierende Antwortelement-Datentyp-Code aufgenommen wird. Die in einer Antwort enthaltenden Antwortelement-Datentypen-Codes und die diesem zugeordneten Datentypen von Antwortelement-Datensätzen können unter Berücksichtigung der Anfrage des Endgerätes gewählt werden. Insbesondere können ein oder mehrere Antwortelement-Datentypen-Codes gewählt werden, welche (in der Anfrage enthaltenen) Anfrageelement-Datentypen-Codes entsprechen, also einen gleichen Datentyp repräsentieren, so daß das Endgerät zuverlässig die Antwort auch interpretieren kann, was insbesondere bei häufigen Updates vorteilhaft ist. Auch ist es möglich, in einer Anfrage diejenigen Antwortelement-Datentyp-Code an die Zentrale zu übermitteln, welche in der Antwort erwartet werden, wobei auch mehrere alternative Anmtwortelement-Datentypen-Codes übermittelt werden können.

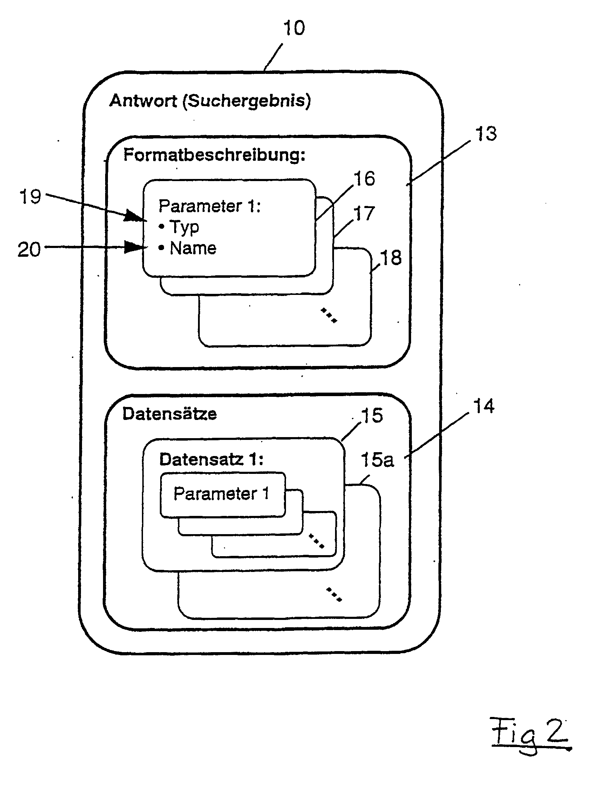

Figur 2 verdeutlicht den möglichen Aufbau einer Antwort 10 der Zentrale an das Endgerät. Die Antwort 10 umfaßt einen Antwortformat-Teil 13 und einen Antwort-Datensatz-Teil 14, sowie gegebenenfalls weitere Elemente wie einen Header.

Der Antwortformat-Teil 13 enthält zu jeweils einem im Antwort-Datensatz-Teil 14 enthaltenden Antwortdatensatz 15, 15a Definitionen (in Form von Antwortelement-Datentypen-Codes 16, 17, 18) zu den in den Datensätzen 15, 15a verwendeten Antwortelement-Datentypen.

Ein Antwortelement-Datentyp-Code 16 enthält hier neben einer alphanumerischen Codierung (="Typ") eines Datentyps auch einen "Namen" des Datentyps, wobei der Name 20 im Endgerät insbesondere im Zusammenhang mit Daten im Antwort-Datensatz-Teil 14 optisch oder akustisch ausgegeben wird.

Die alphanumerische Codierung (="Typ" 19) eines Datentyps, also der Antwortelement-Datentyp-Code kann insbesondere eine Zahl sein, der "Name" 20 insbesondere eine verständliche Angabe hierzu. Die Zuordnung kann beispielsweise folgendermaßen sein:

| "Name" 20 | Antwortelement-Datentyp-Code (="Typ") 19 |
|---|---|
| Auswahlliste | 1 |
| Zeit mit Datum | 2 |
| Zeit ohne Datum | 3 |
| Text | 4 |
| Zahlen | 5 |
| Telefonnummer | 6 |
| Fahrzeugposition | 7 |
| Fahrtrichtung | 8 |
| Land | 9 |
| Stadt | 10 |
| Straße | 11 |
| Postleitzahl | 12 |
| Anfragenummer aus Auswahlliste | 13 |
| Parkplatzanzahl | 14 |
| Öffnungszeit | 15 |
| usw. | |

Die Antwort-Datensatz-Teile können insbesondere in der Reihenfolge der Antwortelement-Datentypen-Codes angeordnet sein. Beispielsweise können die Antwortelement-Datentyp-Codes "4" "5" (für Text, Zahl) und die zugehörigen Antwort-Datensatz-Teile "Kölnerstraße" (zu Text "4"), "57" (zu Zahl "5", hier eine Hausnummer) sein. Wenn eine andere Anordnung vorgesehen ist, kann diese in einem Header der Antwort etc. abgelegt sein.

## Patentansprüche

1. Verfahren zum Übertragen einer eine Anfrage eines Endgerätes bei einer Zentrale beantwortenden Antwort von der Zentrale (5) an das Endgerät (3) über einen Kommunikationskanal (4),
wobei die Anwort zumindest einen Antwortelement-Datensatz enthält, dessen mindestens einer Datentyp jeweils einem in der Antwort enthaltenen Antwortelement-Datentypen-Code zugeordnet ist,
**dadurch gekennzeichnet,**
**dass** in der Antwort Antwortelement-Datentyp-Codes angelegt werden, welche jeweils einem Datentyp mindestens eines in der Antwort enthaltenen Antwortelement-Datensatzes zugeordnet sind, und
**dass** die Antwortelement-Datentypen-Codes und die Definitionen der jeweils einem Antwortelement-Datentypen-Code zugeordneten Datentypen im Endgerät und in der Zentrale jeweils in einer die Zuordnung der Datentypen zu den Antwortelement-Datentypen-Codes repräsentierenden Tabelle abgespeichert werden oder zugreifbar sind, wobei die Antwortelement-Datentyp-Codes jeweils Aufbau und Bedeutung eines ebenfalls in der Antwort enthaltenen Antwortelement-Datensatzes repräsentieren.

2. Verfahren nach Anspruch 1,
**dadurch gekennzeichnet,**
**daß** zumindest die Antwortelement-Datentypen-Codes (16, 17, 18) in einem Antwortformat -Teil (13) der Antwort (10) und daß die Antwortelementdatensätze (15,15a) in einem Antwort-Datensatz-Teil der Antwort bereitgestellt werden.

3. Verfahren nach einem der vorhergehenden Ansprüche
**dadurch gekennzeichnet,**
**daß** die Anfrage (2) einen Anfrageformat-Teil mit Anfrageelement-Datentypen-Codes enthält, wobei einem letzteren jeweils der Datentyp mindestens eines in der Anfrage enthaltenden Anfrageelement-Datensatzes und/oder in der Antwort erwartenden Antwortelement-Datensatz zugeordnet wird, und daß die Anfrage einen Anfrage-Datensatzteil mit mindestens einem Anfrageelement-Datensatz enthält, dessen Datentyp einem der im Anfrageteil enthaltenden Datentypen zugeordnet ist.

4. Verfahren nach einem der vorhergehenden Ansprüche
**dadurch gekennzeichnet,**
**daß** ein, einige oder alle Antwortelement-Datentypen-Codes in der Antwort, insbesondere im Antwortformat-Teil der Antwort, von der Zentrale aufgrund der in der Anfrage verwendeten Anfrageelement-Datentypen-Codes und/oder erwartenden Antwortelement-Datentypen-Codes und/oder des Antwortinhalts gewählt werden.

5. Verfahren nach einem der vorhergehenden Ansprüche
**dadurch gekennzeichnet,**
**daß** von der Zentrale für eine Antwort die Antwortelement-Datentypen-Codes erst nach Ermittlung der in der Antwort in mindestens einem Antwortelement-Datensatz zu übertragenden Informationen ausgewählt werden.

6. Verfahren nach einem der vorhergehenden Ansprüche
**dadurch gekennzeichnet,**
**daß** zumindest einige derAntwortelement-Datentypen identisch zu den Anfrageelement-Datentypen sind.

7. Verfahren nach einem der vorhergehenden Ansprüche
**dadurch gekennzeichnet,**
**daß** bei identischen Antwortelement-Datentypen und Anfrageelement-Datentypen jeweils auch die zugeordneten Antwortetement-Datentypen-Codes und Anfrageelement-Datentypen-Codes identisch sind.

8. Verfahren nach einem der Ansprüche 3 bis 7
**dadurch gekennzeichnet,**
**daß** mindestens ein Datentyp-Code einschließlich zugeordnetem Datentyp oder mindestens ein Antwortformat-Teil für eine mögliche Antwort bei der Herstellung des Endgeräts im Endgerät implementiert wird oder nach einer Übertragung insbesondere einer Antwort von der Zentrale an das Endgerät im Endgerät gespeichert und zur Interpretation späterer Antworten und /oder zum Aufbau einer Anfrage verwendet wird.

9. Verfahren nach einem der vorhergehenden Ansprüche
**dadurch gekennzeichnet,**
**daß** einem Antwortelement-Datentypen-Code eine Abfolge von Datentypen in der Antwort zugeordnet wird.

10. Verfahren nach einem der Ansprüche 2 bis 8
**dadurch gekennzeichnet,**
**daß** ein Antwortelement-Datentyp-Code genau einem Datentyp in der Antwort zugeordnet wird.

11. Verfahren nach einem der vorhergehenden Ansprüche
**dadurch gekennzeichnet,**
**daß** die Erstellung der Anfrage und die Verarbeitung der Antwort auf die Anfrage hin endgerätseitig von getrennten Datenendeinrichtungen durchgeführt werden.

12. Verfahren nach einem der vorhergehenden Ansprüche
**dadurch gekennzeichnet,**
**daß** als Kommunikationskanal ein Funkkanal, insbesondere ein Mobilfunkkanal gewählt wird.

13. Verfahren Anspruch 12
**dadurch gekennzeichnet,**
**daß** per Mobilfunk die Übertragung per Kurznachricht insbesondere GSM-SMS, erfolgt.

14. Verfahren nach einem der vorhergehenden Ansprüche
**dadurch gekennzeichnet,**
**daß** der Datentyp die Länge eines Datensatzes enthält und /oder daß der Datentyp die Bedeutung des Inhalts eines Datensatzes repräsentiert.

15. Verfahren nach einem der vorhergehenden Ansprüche
**dadurch gekennzeichnet,**
**daß** in der Antwort eine in der Zentrale gespeicherte Textsequenz (20) zu einem Antwortelement-Datentypen-Code (TYP 19) enthalten ist.

16. Verfahren nach einem der vorhergehenden Ansprüche
**dadurch gekennzeichnet,**
**daß** als Endgerät ein mobiles Endgerät und als Zentrale eine ortsfeste Zentrale eingesetzt wird.

## Claims

1. Method of transmitting a response to an inquiry by a terminal to a control centre from the said control centre (5) to the terminal (3) via a communications channel (4), wherein the response contains at least one response element data record, whose data type, of which there is at least one, is assigned to a respective response element data type code contained in the response, **characterised in that**, in the response, response element data type codes are applied which are each allocated to a data type of at least one response element data record contained in the response, and **in that** the response element data type codes and the definitions of the data types assigned to a respective response element data type code can be stored or are accessible in the terminal and in the control centre, respectively in a table representing the assignment of the data types to the response element data type codes, the response element data type codes each representing structure and meaning of a response element data record also contained in the response.

2. Method according to claim 1, **characterised in that** at least the response element data type codes (16, 17, 18) are made available in a response format component (13) of the response (10), and **in that** the response element data records (15, 15a) are made available in a response element data record component of the response.

3. Method according to one of the preceding claims, **characterised in that** the inquiry (2) contains an enquiry format component with inquiry element data type codes, in which case the data type of at least one inquiry element data record contained in the inquiry and/or response element data record expected in the response is assigned to one of the inquiry element data type codes, and **in that** the inquiry comprises an inquiry data record component having at least one inquiry element data record whose data type is assigned to one of the data types contained in the inquiry component.

4. Method according to one of the preceding claims, **characterised in that** one or more or all of the response element data type codes are selected in the response, in particular in the response format component of the response by the control centre on the basis of the inquiry element data type codes used in the enquiry and/or expected response element data type code and/or the response content.

5. Method according to one of the preceding claims, **characterised in that** the response element data type codes are not selected for a response by the control centre until the data to be transmitted in the response in at least one response element data record have been determined.

6. Method according to one of the preceding claims, **characterised in that** at least some of the response element data types are identical to the enquiry element data types.

7. Method according to one of the preceding claims, **characterised in that** if response element data types and enquiry element data types are identical, the respectively assigned response element data type codes and enquiry element data type codes are identical.

8. Method according to one of claims 3 to 7, **characterised in that** at least one data type code including the assigned data type or at least one response format component is implemented in the terminal for a possible response in the manufacture of the terminal appliance, or after transmission in particular of a response by the control centre to the terminal is stored in the terminal and is used to interpret subsequent responses and/or to construct an enquiry.

9. Method according to one of the preceding claims, **characterised in that** a sequence of data types is assigned to a response element data type code in the response.

10. Method according to one of claims 2 to 8, **characterised in that** a response element data type code is assigned to precisely one data type in the response.

11. Method according to one of the preceding claims, **characterised in that** setting up of the enquiry and processing of the response to the enquiry are carried out at the terminal appliance by separate data terminal devices.

12. Method according to one of the preceding claims, **characterised in that** as a communications channel a radio channel, in particular a mobile radial channel is selected.

13. Method according to claim 12, **characterised in that** each mobile transmission takes place via short message service, in particular GSM-SMS.

14. Method according to one of the preceding claims **characterised in that** the data type contains the length of a data record andlor **in that** the data type represents the meaning of the content of a data record.

15. Method according to one of the preceding claims, **characterised in that** a text sequence (20) centre to a response element data type code (TYP 19) stored in the control is contained in the response.

16. Method according to one of the preceding claims, **characterised in that** as a terminal appliance a mobile appliance is used and as a control centre a stationary control centre is used.

## Revendications

1. Procédé pour transmettre une réponse, répondant à une demande d'un terminal auprès d'une centrale, de la centrale (5) au terminal (3) via un canal de communication (4), la réponse contenant au moins un jeu de données d'éléments de réponse, dont au moins un type de données est associé, à chaque fois, à un code de types de données d'éléments de réponse,
**caractérisé en ce que**, dans la réponse, sont stockés des codes de types de données d'éléments de réponse qui, à chaque fois, sont associés à un type de données d'au moins un jeu de données d'éléments de réponse contenu dans la réponse, et **en ce que** les codes de types de données d'éléments de réponse et les définitions des types de données à chaque fois associés à un code de type de données d'éléments de réponse sont mémorisés ou accessibles dans le terminal et dans la centrale à chaque fois dans une table représentant l'association des types de données aux codes de types de données d'éléments de réponse, les codes de types de données d'éléments de réponse représentant à chaque fois l'élaboration et la signification d'un jeu de données d'éléments de réponse contenu de même dans la réponse.

2. Procédé selon la revendication 1,
**caractérisé en ce qu'**au moins les codes de types de données d'éléments de réponse (16, 17, 18) sont mis à disposition dans une partie de format de réponse (13) de la réponse (10) et **en ce que** les jeux de données d'éléments de réponse (15, 15a) sont mis à disposition dans une partie de jeux de données de réponse de la réponse.

3. Procédé selon une des revendications précédentes,
**caractérisé en ce que** la demande (2) contient une partie de format de demande avec des codes de types de données d'éléments de demande, à chacun desquels, à chaque fois, le type de données d'au moins un jeu de données d'éléments de demande contenu dans la demande et/ou un jeu de données d'éléments de réponse attendu dans la réponse est associé, et **en ce que** la demande contient une partie de jeux de données de demande avec au moins un jeu de données d'éléments de demande dont le type de données est associé à un type de données contenu dans la partie de demande.

4. Procédé selon une des revendications précédentes,
**caractérisé en ce qu'**un, quelques-uns ou tous les codes de types de données d'éléments de réponse dans la réponse, en particulier dans la partie de format de réponse de la réponse, sont choisis par la centrale sur la base des codes de types de données d'éléments de demande utilisés dans la demande et/ou des codes de types de données d'éléments de réponse attendus et/ou du contenu de la réponse.

5. Procédé selon une des revendications précédentes,
**caractérisé en ce que** les codes de types de données d'éléments de réponse sont sélectionnés, par la centrale pour une réponse, uniquement après détermination des informations à transmettre dans la réponse dans au moins un jeu de données d'éléments de réponse.

6. Procédé selon une des revendications précédentes,
**caractérisé en ce qu'**au moins quelques-uns des types de données d'éléments de réponse sont identiques aux types de données d'éléments de demande.

7. Procédé selon une des revendications précédentes,
**caractérisé en ce que**, pour des types de données d'éléments de demande et des types de données d'éléments de réponse identiques, à chaque fois également les codes de types de données d'éléments de demande et les codes de types de données d'éléments de réponse associés sont identiques.

8. Procédé selon une des revendications 3 à 7,
**caractérisé en ce qu'**au moins un code de type de données y compris le type de données associé ou au moins une partie de format de réponse pour une réponse possible est intégré dans le terminal lors de la fabrication du terminal ou, après une transmission d'en particulier une réponse de la centrale au terminal, est mémorisé dans le terminal et est utilisé pour l'interprétation de réponses ultérieures et/ou pour élaborer une demande.

9. Procédé selon une des revendications précédentes,
**caractérisé en ce qu'**une suite de types de données dans la réponse est associée à un code de type de données d'éléments de réponse.

10. Procédé selon une des revendications 2 à 8,
**caractérisé en ce qu'**un code de type de données d'éléments de réponse est associé dans la réponse précisément à un type de données.

11. Procédé selon une des revendications précédentes,
**caractérisé en ce que** l'élaboration de la demande et le traitement de la réponse à partir de la demande sont effectués du côté du terminal par des dispositifs terminaux de données séparés.

12. Procédé selon une des revendications précédentes,
**caractérisé en ce que**, comme canal de communication, un canal radio, en particulier un canal de radiotéléphonie mobile, est choisi.

13. Procédé selon la revendication 12,
**caractérisé en ce que**, par radiotéléphonie mobile, la transmission est effectuée par message court, en particulier GSM-SMS.

14. Procédé selon une des revendications précédentes,
**caractérisé en ce que** le type de données contient la longueur d'un jeu de données et/ou **en ce que** le type de données représente la signification du contenu d'un jeu de données.

15. Procédé selon une des revendications précédentes,
**caractérisé en ce que**, dans la réponse, une séquence de texte (20) mémorisée dans la centrale est contenue en un code de type de données d'éléments de réponse (type 19).

16. Procédé selon une des revendications précédentes,
**caractérisé en ce que**, comme terminal, on utilise un terminal mobile et, comme centrale, une centrale fixe.
